# EUROPEAN PATENT APPLICATION

(11) **EP 2 267 284 A1**
(43) Date of publication of application: **29.12.2010**
(21) Application number: 08752168.8
(22) Date of filing: 25.04.2008
(51) Int. Cl.: F02B 37/007, F02B 37/24, F02B 39/16

(54) **SUPERCHARGER CONTROLLER FOR INTERNAL-COMBUSTION ENGINE**

(71) Applicant: Toyota Jidosha Kabushiki Kaisha, Toyota-shi, Aichi 471-8571 (JP)
(72) Inventor: IWATANI, Kazuki, Toyota-shi Aichi 471-8571 (JP)
(74) Representative: Intès, Didier Gérard André
(86) International application number: PCT/JP2008/058134
(87) International publication number: WO 2009/130792

(57) **Abstract**

A first and a second supercharger are arranged in parallel with each other on an intake air passage and an exhaust passage. At least one of the first and the second superchargers includes a variable supercharging mechanism. The control unit determines a target air amount ratio of the first and the second superchargers, and controls the variable supercharging mechanism such that an actual air amount ratio of the first and the second superchargers becomes equal to the target air amount ratio. The air amount ratio which does not cause the surge in the first and the second superchargers is set as the target air amount ratio, and the variable supercharging mechanism is controlled by using it as a target.

## Description

### TECHNICAL FIELD

This invention relates to an apparatus for controlling two superchargers arranged, in parallel with each other, on an intake air passage and an exhaust passage.

### BACKGROUND TECHNIQUE

Conventionally, there is proposed a technique for arranging two superchargers in parallel with each other on an intake system and an exhaust system and for suitably switching the number of the superchargers in operation. For example, a Patent Reference-1 discloses an example of an internal combustion engine in which a primary turbocharger and a secondary turbocharger having larger capacity than the primary turbocharger are arranged in parallel with each other, and in which at least the primary turbocharger is formed as a variable nozzle type turbocharger. In this reference, the supercharging pressure is appropriately controlled by controlling the opening degree of the variable nozzle of the turbocharger in accordance with the number of revolution of the internal combustion engine.

In the supercharging system as the Patent Reference-1, since the capacities of two turbochargers are different from each other, the surge occurs to the turbochargers under different conditions. Therefore, even in a case that the supercharging condition of each of the turbochargers are appropriately controlled in a twin turbo mode in which two turbochargers operate at the same time, it is likely that the surge occurs. Patent Reference-1: Japanese Patent Application Laid-Open under No. 2005-155356

### DISCLOSURE OF THE INVENTION

### PROBLEM TO BE SOLVED BY THE INVENTION

The present invention is achieved to solve the above-mentioned problem, and its object is to provide a supercharger controlapparatusfor an internal combustion engine capable of controlling the supercharging pressure in a broad range by utilizing a variable supercharging mechanism, without causing the surge.

### MEANS FOR SOLVING THE PROBLEM

According to one aspect of the present invention, there is provided a supercharger control apparatus for an internal combustion engine, including: a first and a second superchargers arranged in parallel with each other on an intake air passage and an exhaust passage; and a control unit which executes an air amount ratio control for controlling air amounts of the first and the second superchargers such that the air amount ratio of the first supercharger and the second supercharger becomes within a predetermined range.

In the above supercharger control apparatus, the first and the second superchargers are arranged in parallel with each other between the intake air passage and the exhaust passage. The air amounts of the first and the second superchargers are controlled such that the air amount ratio of the first supercharger and the second supercharger becomes within a predetermined range. Thereby, it is prevented that the surge occurs in the first and the second superchargers.

According to one mode of the above supercharger control apparatus, at least one of the first and the second supercharger includes a variable supercharging mechanism, and the control unit determines a target air amount ratio of the first and the second superchargers, and controls the variable supercharging mechanism such that an actual air amount ratio of the first and the second superchargers becomes equal to the target air amount ratio.

According to this mode, the air amount ratio which does not cause the surge in the first and the second superchargers is set as the target air amount ratio, and the variable supercharging mechanism is controlled by using it as the target.

Another mode of the supercharger control apparatus further includes an air amount detecting unit which detects the air amounts of the first and the second superchargers, and the control unit determines the actual air amount ratio based on the air amounts detected by the air amount detecting unit.

According to still another mode of the supercharger control apparatus, the second supercharger has a larger capacity than the first supercharger, the control unit executes a supercharging pressure control which feedback-controls the air amounts such that supercharging pressures of the first and the second superchargers become equal to target supercharging pressure, respectively, and the control unit makes a feedback control amount of the second supercharger to be smaller than the feedback control amount of the first supercharger when executing the supercharging pressure control. Thereby, the difference of the feedback control sensitivity caused by the difference of the capacities of the superchargers can be adjusted.

According to still another mode of the supercharger control apparatus, the first and the second superchargers include a variable supercharging mechanism, and the control unit executes the air amount ratio control in one of the first and the second superchargers, and executes a supercharging pressure control which feedback-controls the air amount such that the supercharging pressure becomes equal to a target supercharging pressure in the other one of the first and the second superchargers.

In this mode, one of two superchargers executes the supercharging pressure control and the other executes the air amount ratio control, and therefore accurate supercharging pressure control can be achieved in a broad range with preventing the occurrence of the surge.

According to still another mode of the supercharger control apparatus, the control unit executes the air amount ratio control at a time of a deceleration of the internal combustion engine. Thereby, the occurrence of the surge can be surely prevented at the time of the decelerating state of the vehicle, at which the surge is likely to occur.

### BRIEF DESCRIPTION OF THE DRAWINGS

FIG.1 is a diagram showing a schematic configuration of a vehicle to which the supercharger control apparatus according to the present invention is applied.
FIG. 2 is a diagram showing a relation between a variable nozzle opening degree and a supercharging pressure control range of two turbochargers.
FIG. 3 is a diagram showing limit characteristics and surge margins of two turbochargers.
FIGS. 4A to 4C are diagrams for explaining a variable nozzle control method of the turbocharger according to a first example.
FIG. 5 is a flowchart of a supercharger control according to the first example.
FIG. 6 is a flowchart of a supercharging pressure control.
FIG. 7 is a flowchart of an air amount ratio control.
FIG. 8 is a flowchart of the supercharger control according to a second example.
FIG. 9 is a diagram showing a state in which the surge occurs at the time of deceleration of the vehicle.
FIG. 10 is a flowchart of the supercharger control according to a third example.

### DESCRIPTION OF REFERENCE NUMBERS

- 2: Air Cleaner
- 3: Intake Air Passage
- 4, 5: Turbocharger
- 4a, 5a: Compressor
- 4b, 5b: Turbine
- 4c, 5c: Variable Nozzle
- 6: Intake Air Switching Valve
- 8: Internal Combustion Engine
- 8a: Cylinder
- 9: Supercharging Pressure Sensor
- 10: Exhaust Passage
- 11: EGR Passage
- 14: EGR Valve
- 15: Exhaust Gas Switching Valve
- 16: Exhaust Gas Bypassing Valve
- 50: ECU

### BEST MODE FOR EXERCISING THE INVENTION

The preferred embodiments of the present invention will now be described below with reference to the attached drawings.

### [Entire Configuration]

First, the description will be given of an entire configuration of a system to which a supercharger control apparatus for an internal combustion engine according to the embodiment is applied.

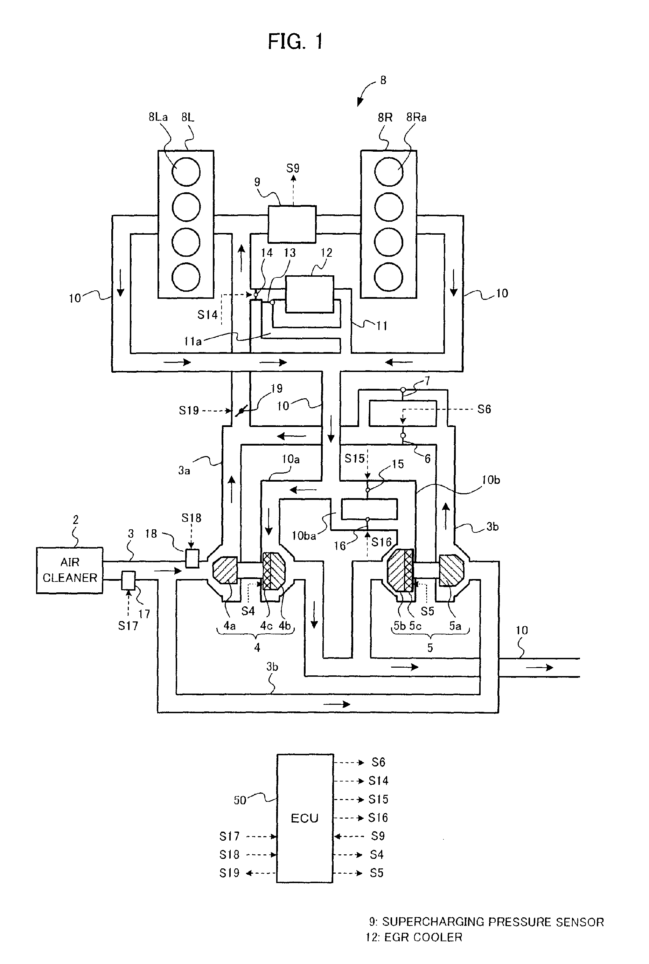

FIG. 1 is a schematic diagram showing a configuration of a vehicle to which the supercharger control device for an internal combustion engine according to the embodiment is applied. In FIG. 1, the solid arrows show the flows of gas and the broken arrows show the input/output of signals.

The vehicle mainly includes an air cleaner 2, an intake air passage 3, a first turbocharger 4, a second turbocharger 5, an intake air switching valve 6, a reed valve 7, an internal combustion engine 8, a supercharging pressure sensor 9, an exhaust passage 10, an EGR passage 11, an EGR valve 14, an exhaust gas switching valve 15, an exhaust gas bypassing valve 16 and an ECU (Engine Control Unit) 50.

The air cleaner 2 purifies the air (intake air) obtained from outside and supplies it to the intake air passage 3. The intake air passage 3 branches on its way into the intake air passages 3a, 3b. An air flow meter 17 is provided on the intake air passage 3 upstream of the branch position of the intake air passage 3, and an air flow meter 18 is provided on the intake air passage 3a. The air flow meters 17, 18 detect the flow amount of the intake air (fresh air) flowing through the intake air passages 3, 3a, and supply the detection signals S17, S18 to the ECU 50, respectively. In this configuration, the air flow meter 17 outputs the detection signal S17 indicating the total of the intake air flow amount flowing through the intake air passages 3a, 3b, and the air flow meter 18 outputs the detection signal S18 indicating the intake air flow amount flowing through the intake air passage 3a. The ECU 50 can calculate the intake air flow amount flowing through the intake air passage 3b by calculating the difference between the detection signals S17 and S18.

A compressor 4a of the turbocharger 4 is arranged on the intake air passage 3a, and a compressor 5a of the turbocharger 5 is arranged on the intake air passage 3b. The compressors 4a, 5a compress the intake air passing through the intake air passages 3a, 3b, respectively.

A throttle valve 19 is provided downstream of the joining position of the intake air passages 3a and 3b. The throttle valve 19 is a valve to control the intake air flowing amount, and the opening degree of the throttle valve 19 is controlled by the control signal S19 supplied form the ECU 50.

On the intake air passage 3b, the intake air switching valve 6 and the reed valve 7 are provided. The intake air switching valve 6 is configured such that its opening and closing are controlled by the control signal S6 supplied from the ECU 50 and the flow amount of the intake air passing through the intake air passage 3b is adjustable. For example, by opening and closing the intake air switching valve 6, the flow and cutoff of the intake air in the intake air passage 3b can be switched. The reed valve 7 is configured to open when the pressure inside the passage becomes equal to or higher than a predetermined value.

The supercharging pressure sensor 9 is provided on the intake air passage 3 at the downstream position of the throttle valve 19. The supercharging pressure sensor 9 detects the pressure of the supercharged intake air (hereinafter referred to as "actual supercharging pressure"), and supplies the detection signal S9 corresponding to the actual supercharging pressure to the ECU 50.

The internal combustion engine 8 is configured as a V-type 8-cylinder engine in which four cylinders 8La, 8Ra are provided on the right and left banks (cylinder groups) 8L, 8R, respectively. The internal combustion engine 8 burns the fuel-air mixture of the intake air and the fuel supplied from the intake air passage 3 to generate power. The internal combustion engine 8 is configured by a gasoline engine or a diesel engine, for example. The exhaust gas generated by the combustion in the internal combustion engine 8 is discharged to the exhaust passage 10. It is noted that the present invention is not limited to the internal combustion engine 8 configured to have 8 cylinders.

The EGR passage 11 is connected to the exhaust passage 10. The EGR passage 11 is connected to the exhaust passage 10 at one end and is connected to the intake air passage 3 at the other end. The EGR passage 11 is a passage for recirculating the exhaust gas (EGR gas) to the intake air system. The EGR passage 11 is provided with an EGR cooler 12, an EGR valve 14, a bypass passage 11a and a bypass valve 13. The EGR cooler 12 is a device for cooling the EGR gas. The EGR valve 14 is a valve for adjusting the flow amount of the EGR gas passing through the EGR passage 11, i.e., a valve for adjusting the amount of the EGR gas recirculated to the intake air system. The opening degree of the EGR valve 14 is controlled by the control signal S14 supplied from the ECU 50. The bypass passage 11a is a passage bypassing the EGR cooler 12 and is provided with the bypass valve 13. By the bypass valve 13, the flow amount of the EGR gas passing through the bypass passage 11a is adjusted.

The exhaust passage 10 branches, on its way, into the exhaust passages 10a, 10b. The turbine 4b of the turbocharger 4 is arranged on the exhaust passage 10a, and the turbine 5b of the turbocharger 5 is arranged on the exhaust passage 10b. The turbines 4b, 5b are rotated by the exhaust gas passing through the exhaust passages 10a, 10b, respectively. The rotational torque of the turbines 4b, 5b are transmitted to the compressor 4a in the turbocharger 4 and the compressor 5a in the turbocharger 5 to rotate them, and thereby the intake air is compressed (i.e., supercharged). The first turbocharger 4 is configured as a low-speed type supercharger of small capacity, having a large supercharging ability in a low to medium speed range. The second turbocharger 5 is configured as a high-speed type supercharger of large capacity, having a large supercharging ability in a medium to high speed range.

The turbochargers 4, 5 include variable nozzles (VN) 4c, 5c serving as the variable supercharging mechanism, respectively. The opening degrees of the variable nozzles 4c, 5c are adjusted by the control signals S4, S5 supplied from the ECU 50. The supercharging pressure of the turbocharger increases when the variable nozzle is closed, and the supercharging pressure of the turbocharger decreases when the variable nozzle is opened. Although both of the turbochargers 4, 5 are configured as the variable turbochargers having the variable nozzles 4c, 5c in FIG. 1, in each of the embodiments of the present invention described later, there are cases where only the turbocharger 4 is configured as the variable turbocharger and where both of the turbochargers 4, 5 are configured as the variable turbocharger.

To the exhaust passage 10b, the exhaust gas switching valve 15 is provided and the exhaust gas bypassing passage 10ba is connected. The opening and closing of the exhaust gas switching valve 15 is controlled by the control signal S15 supplied from the ECU 50, so that the exhaust gas switching valve 15 can adjust the flow amount of the exhaust gas passing through the exhaust passage 10b. For example, by opening and closing the exhaust gas switching valve 15, the flow and cutoff of the exhaust gas in the exhaust passage 10b can be switched. The exhaust gas bypassing passage 10ba is configured as a passage bypassing the exhaust passage 10b provided with the exhaust gas switching valve 15. Specifically, the exhaust gas bypassing passage 10ba has a diameter smaller than that of the exhaust passage 10b provided with the exhaust gas switching valve 15. The exhaust gas bypassing valve 16 is provided in the exhaust gas bypassing passage 10ba, and the flow amount of the exhaust gas passing through the exhaust gas bypassing passage 10ba is adjusted by the exhaust gas bypassing valve 16.

When all of the intake air switching valve 6, the exhaust gas switching valve 15 and the exhaust gas bypassing valve 16 are closed, the intake air and the exhaust gas are supplied only to the turbocharger 4, and the intake air and the exhaust gas are not supplied to the turbocharger 5. Therefore, only the turbocharger 4 operates, and the turbocharger 5 does not operate. On the other hand, when the intake air switching valve 6 is opened and either one of the exhaust gas switching valve 15 and the exhaust gas bypassing valve 16 is opened, the intake air and the exhaust gas are supplied to both of the turbochargers 4, 5. Therefore, both of the turbochargers 4, 5 operate.

The ECU 50 is configured to include a CPU, a ROM, a RAM and an A/D converter, which are not shown. The ECU 50 controls the vehicle based on the outputs supplied from various sensors provided in the vehicle. Specifically, the ECU 50 obtains the actual supercharging pressure from the supercharging pressure sensor 9, and controls the intake air switching valve 6, the EGR valve 14, the exhaust gas switching valve 15 as well as the exhaust gas bypassing valve 16 based on the actual supercharging pressure.

Particularly, by controlling the intake air switching valve 6, the exhaust gas switching valve 15 and the exhaust gas bypassing valve 16, the ECU 50 performs the control of switching the mode in which only the first turbocharger 4 is operated (hereinafter referred to as "single turbo mode") and the mode in which both the first and second turbochargers 4, 5 are operated (hereinafter referred to as "double turbo mode"). Specifically, the ECU 50 executes the switching from the single turbo mode to the double turbo mode and the switching from the double turbo mode to the single turbo mode, based on the driving state such as the number of engine revolution and the requested torque. Basically, the supercharging is performed by the single turbo mode at the low speed revolution range of the internal combustion engine, and the supercharging is performed by the double turbo mode at the time of acceleration and at the high speed revolution range.

Here, the basic control executed when the single turbo mode and the double turbo mode are switched will be briefly described. As described above, the mode is switched by the ECU 50 controlling the intake air switching valve 6, the exhaust gas switching valve 15 and the exhaust gas bypassing valve 16. Specifically, when the single turbo mode is switched to the double turbo mode, the ECU 50 controls the intake air switching valve 6, the exhaust gas switching valve 15 and the exhaust gas bypassing valve 16 from the opened state to the closed state. In this case, the ECU 50 basically opens the exhaust gas bypassing valve 16, the exhaust gas switching valve 15 and the intake air switching valve 6 in this order to execute the switching. More specifically, first the exhaust gas bypassing valve 16 is opened little by little. Then, when a predetermined condition is satisfied in this state, the exhaust gas switching valve 15 is opened little by little, and then the intake air switching valve 6 is opened. In this case, the reason why the exhaust gas bypassing valve 16 is first opened a little is to gradually operate (i.e., run-up) the turbocharger 5 by supplying the exhaust gas of relatively small flow amount to the turbocharger 5 (because the diameter of the exhaust gas bypassing passage 10ba is small). In other words, it is prevented that the exhaust gas of relatively large flow amount rushes into the turbocharger 5 to cause a torque shock when the exhaust gas switching valve 15 is opened first. On the other hand, when the single turbo mode is switched to the double turbo mode, the ECU 50 controls the intake air switching valve 6, the exhaust gas switching valve 15 and the exhaust gas bypassing valve 16 from the opened state to the closed state in a similar manner as described above.

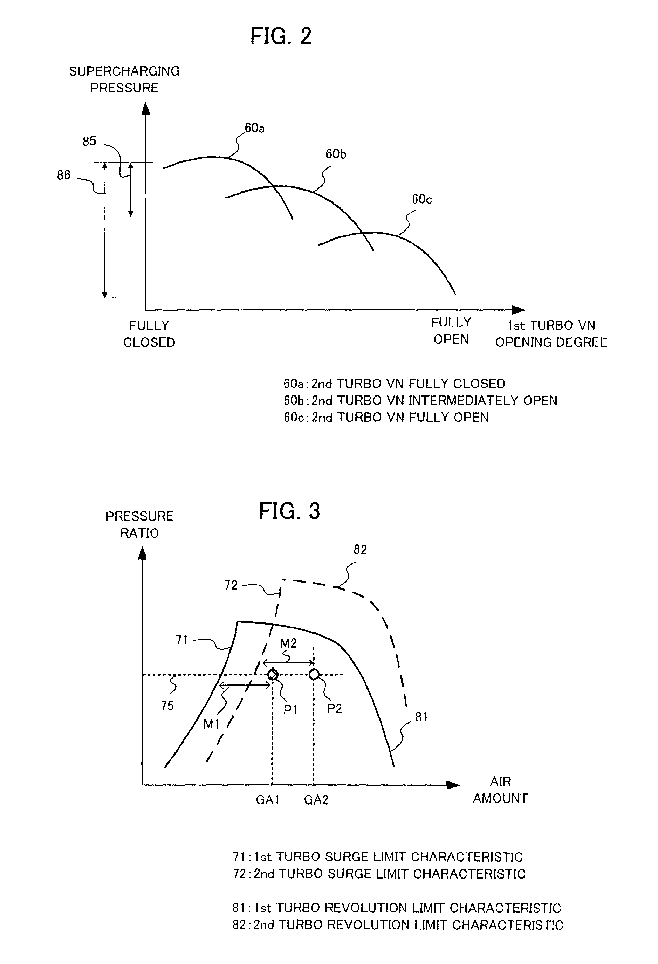

FIG. 2 is a graph showing the relation between the variable nozzle opening degree and the supercharging pressure of each of the turbochargers in the case that two turbochargers are the variable turbochargers. In FIG. 2, the horizontal axis indicates the variable nozzle (VN) opening degree of the first turbocharger 4, and the vertical axis indicates the supercharging pressure. The graph 60a indicates the supercharging pressure when the variable nozzle opening degree of the second turbocharger 5 is fully closed, the graph 60b indicates the supercharging pressure when the variable nozzle opening degree of the second turbocharger 5 is an intermediate opening degree, and the graph 60c indicates the supercharging pressure when the variable nozzle opening degree of the second turbocharger 5 is fully open. It is noted that the supercharging pressure shown by each of the graphs 60a to 60c is the supercharging pressure of the whole system, i.e., the supercharging pressure by two turbochargers.

As understood from FIG. 2, the supercharging pressure becomes highest when the variable nozzle opening degree of two turbochargers are fully closed, and the supercharging pressure becomes lowest when the variably nozzle opening degree of two turbochargers are fully open. FIG. 2 shows that the supercharging pressure can be controlled in a broad range by forming two turbochargers as the variable turbochargers. Namely, if only the first turbocharger 4 is formed as the variable turbocharger, the second turbocharger is equivalent to the state that its variable nozzle is fully closed, and therefore the controllable range of the supercharging pressure is limited to the range shown by the graph 60a, i.e., the supercharging pressure range shown by the arrow 85. In contrast, if the second turbocharger 5 is also formed as the variable turbocharger, the supercharging pressure can be controlled in the range of the graph 60a to 60c, i.e., in the broad range shown by the arrow 86, by controlling the variable nozzle opening degrees of two turbochargers.

### [1st Embodiment]

Next, the first embodiment of the present invention will be described.

First, the description will be given of the operation limit and occurrence of surge in a case that two turbochargers are the variable turbochargers. FIG. 3 shows the operation limit characteristics of the first turbocharger 4 and the second turbocharger 5, specifically the surge limit characteristics and the revolution limit characteristics. In FIG. 3, the horizontal axis indicates the air amount flowing through each of the turbochargers, and the vertical axis indicates the pressure ratio. Here, the "pressure ratio" indicates the ratio of the supercharging pressure with respect to the atmospheric pressure, and two turbochargers have the pressure ratio of the same value.

The turbocharger has a revolution limit. If the pressure ratio and the air amount of the turbocharger increases and exceeds the revolution limit, the turbocharger may be broken. In FIG. 3, the solid line graph 81 shows the revolution limit characteristic of the first turbocharger 4, and the broken line graph 82 shows the revolution limit characteristic of the second turbocharger. The reason why those two revolution limit characteristics are different from each other is that the capacities of the turbochargers are different from each other. In order to prevent the turbocharger from being broken, it is necessary to maintain the operating points, determined by the air amount and the pressure ratio, in the left and lower area of the revolution limit characteristic.

Additionally, in the turbocharger, the pressure and the flow amount of the intake air periodically vary and the operation becomes unstable, when the engine is operating at low revolution. This phenomenon is called "surge". Accordingly, it is necessary to operate two turbochargers in the area where the surge does not occur. In FIG. 3, the solid line graph 71 indicates the surge limit characteristic of the first turbocharger 4, and the broken line graph 72 indicates the surge limit characteristic of the second turbocharger 5. The reason why those two surge limit characteristics are different from each other is that the capacities of the turbochargers are different from each other. Therefore, in order to prevent the occurrence of the surge, it is necessary to maintain the operating points of two turbochargers on the right side of the surge limit characteristics.

If the capacities of two turbochargers are equal to each other, it is sufficient to control such that the air amount of two turbochargers are equal to each other. However, the capacities of two turbochargers are different from each other in this embodiment. Therefore, as understood from FIG. 3, if the air amount of two turbochargers are controlled to be equal to each other, the second turbocharger 5 having larger capacity is likely to cause the surge because the surge limit characteristic 72 of the second turbocharger 5 exists on the right side of the surge limit characteristic 71 of the first turbocharger 4. Therefore, in the present invention, the air amount of each of the turbochargers is controlled such that two turbochargers have the equivalent margin against the respective surge limit. Specifically, as shown in FIG. 3, the air amount of the first turbocharger 4 is controlled such that the first turbocharger operates at the operating point P1 having a predetermined margin M1 (hereinafter referred to as "surge margin") with respect to the surge limit characteristic 71. At the same time, the air amount of the second turbocharger 5 is controlled such that the second turbocharger operates at the operating point P2 having a predetermined margin M2 (= M1) with respect to the surge limit characteristic 72. The control of the air amount is achieved by the control of the variable nozzle opening degree. Thus, two turbochargers operate in a state of having the equivalent margin with respect to the respective surge limit, and the occurrence of the surge in any one of the turbochargers can be prevented.

As the control method, the variable nozzle opening degree of the first turbocharger, or the variable nozzle opening degrees of the first and second turbochargers is controlled such that the air amount ratio of the air amount GA1 for operating the first turbocharger 4 at the operating point P1 and the air amount GA2 for operating the second turbocharger 5 at the operating point P2 becomes a value within a predetermined range, more preferably becomes a predetermined target air amount ratio (GA1/GA2). Thereby, the occurrence of the surge can be prevented with controlling the supercharging pressure in a broad range. The specific control in each of the examples will be described below.

### (1st Example)

In a first example, only the first turbocharger 4 is formed as the variable turbocharger, and the second turbocharger 5 is formed as the turbocharger without variable nozzle. In this case, in the first turbo mode, the ECU 50 controls the opening degree of the variable nozzle 4c such that the actual supercharging pressure of the first turbocharger 4 coincides with the target supercharging pressure. It is noted that the target supercharging pressure is determined by the operating state such as the number of engine revolution and the requested torque. This control will be called as "supercharging pressure control" or "supercharging pressure feedback (F/B) control".

On the other hand, in the double turbo mode, the ratio of the air amount flowing through each of the turbochargers 4, 5 varies in accordance with the opening degree of the variable nozzle 4c of the turbocharger 4. Specifically, when the variable nozzle 4c is closed, the air amount of the first turbocharger 4 decreases, and the air amount of the second turbocharger 5 increases by the amount corresponding to the decrease. Oppositely, when the variable nozzle is opened, the air amount of the first turbocharger 4 increases, and the air amount of the second turbocharger 5 decreases by the amount corresponding to the increase. In both cases, the surge may occur as described above, if the air amount decreases too much. Therefore, in the double turbo mode, the opening degree of the variable nozzle 4c of the first turbocharger 4 is controlled such that the surge margins of two turbochargers become equivalent to each other, specifically the air amount ratio of two turbochargers becomes the predetermined target air amount ratio, as described with reference to FIG. 3. This control will be called as "air amount ratio control".

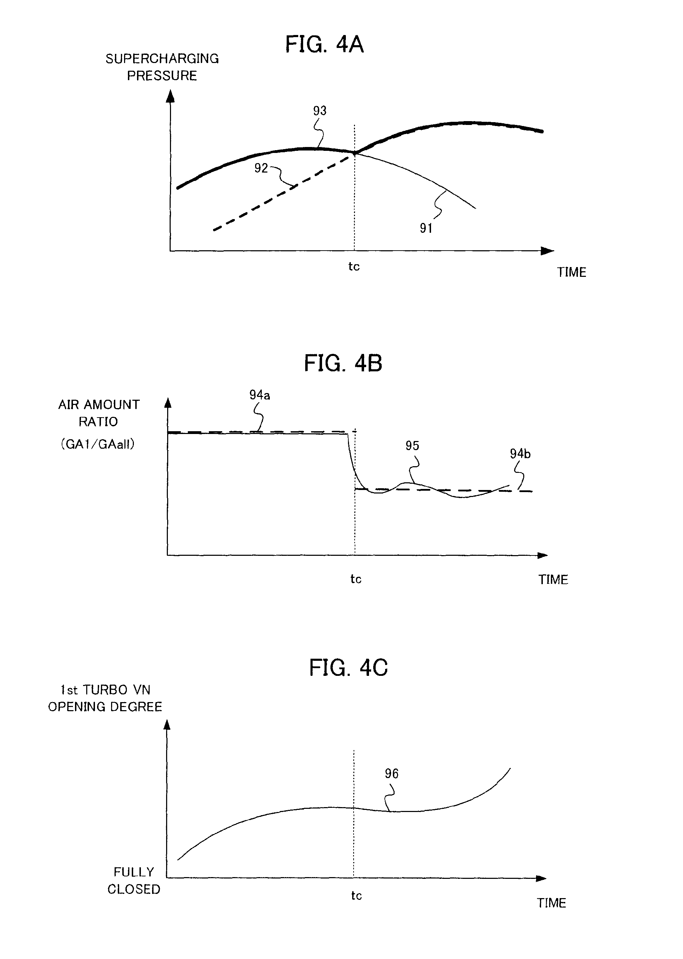

FIGS. 4A to 4C are graphs showing the operation states of the first turbocharger in the first example. FIG. 4A shows the time variation of the supercharging pressure of the first turbocharger, FIG. 4B shows the time variation of the ratio (i.e., the air amount ratio GA1/GAall) of the air amount GA1 of the first turbocharger with respect to the whole air amount GAall (the total of the air amounts of the first and second turbochargers), FIG. 4C shows the time variation of the variable nozzle opening degree of the first turbocharger. In FIGS. 4A to 4C, the single turbo mode is performed until the time tc, and the turbo mode is switched to the double turbo mode at the time tc.

In FIG. 4A, since the single turbo mode is performed until the time tc, the supercharging pressure varies according to the characteristic 91 of the single turbo mode. Then, after the time tc, the supercharging pressure varies according to the characteristic 92 of the double turbo mode. Therefore, the supercharging pressure actually varies according to the characteristic 93.

In FIG. 4B, in the first turbocharger 4, the opening degree of the variable nozzle 4c is controlled, by the supercharging pressure control, such that the actual supercharging pressure becomes the target supercharging pressure until the time tc. The broken line 94a in FIG. 4B indicates the air amount ratio of the first turbocharger 4 in the single turbo mode. This air amount ratio corresponds to the air amount when the actual supercharging pressure becomes equal to the target supercharging pressure. On the other hand, after the time tc, the variable nozzle 4c is controlled such that the air amount of the first and second turbochargers coincide with the predetermined air amount ratio with which the respective surge margins become equivalent to each other. The broken line 94b shows the air amount ratio of the first turbocharger at that time.

In FIG. 4C, in the first turbocharger 4, the opening degree of the variable nozzle 4c is controlled by the supercharging pressure control until the time tc. Then, after the time tc, the variable nozzle 4c is controlled such that the first and second turbochargers have the predetermined target air amount ratio with which the respective surge margins become equivalent to each other.

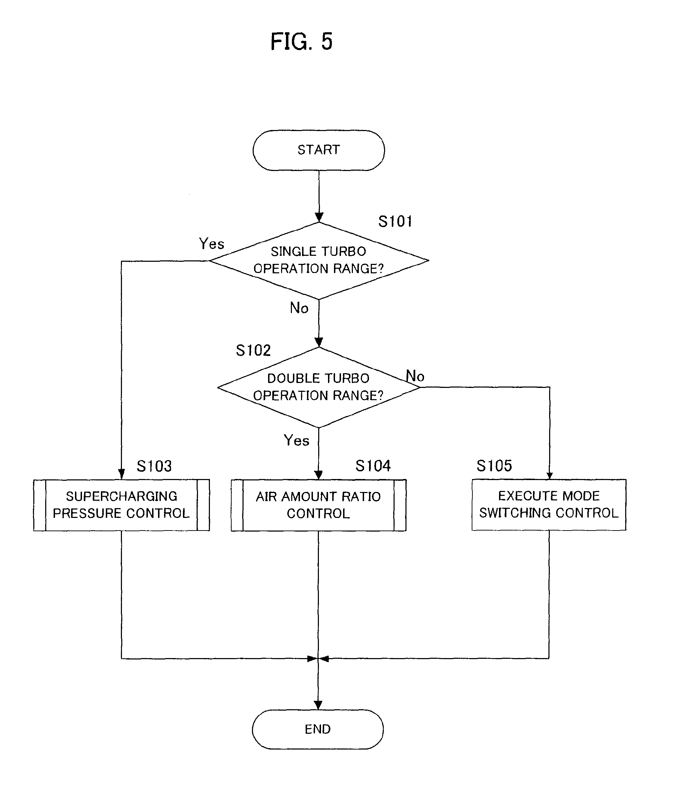

FIG. 5 is a flowchart of the supercharger control according to the first example. First, the ECU 50 determines whether or not the operating state of the internal combustion engine is within the operational range of the single turbo mode (step S101). If it is within the operational range of the single turbo mode, the ECU 50 executes the supercharging pressure control (step S103). On the other hand, if it is not within the operational range of the single turbo mode (step S101; No), the ECU 50 determines whether it is within the operational range of the double turbo mode (step S102). If it is within the operational range of the double turbo mode, the ECU 50 executes the air mount ratio control (step S104). On the other hand, if it is not within the operational range of the double turbo mode (step S102; No), the ECU 50 executes the mode switching control between the single turbo mode and the double turbo mode (step S105).

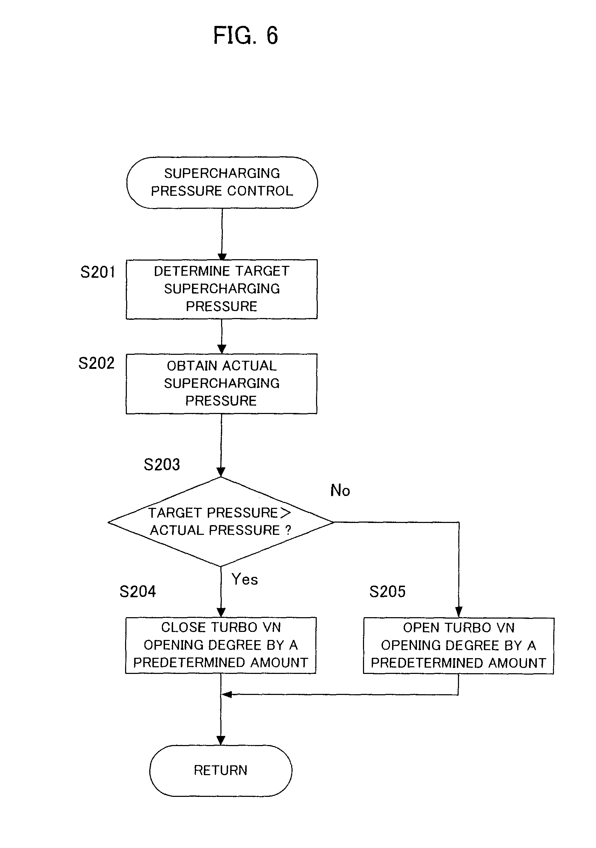

Next, the supercharging pressure control in step S103 will be described in detail. FIG. 6 is a flowchart of the supercharging pressure control. First, the ECU 50 determines the target supercharging pressure based on the operating state of the internal combustion engine, specifically the number of engine revolution and the requested torque (step S201). Then, the ECU 50 obtains the actual supercharging pressure from the detection signal S9 from the supercharging pressure sensor 9 (step S202). Then, the ECU 50 executes the feedback control of the variable nozzle opening degree of the turbocharger such that the actual supercharging pressure becomes equal to the target supercharging pressure. Specifically, when the actual supercharging pressure is lower than the target supercharging pressure (step S203; Yes), the ECU 50 closes the variable nozzle opening degree of the turbocharger by a predetermined amount (step S204). On the other hand, when the actual supercharging pressure is higher than the target supercharging pressure (step S204; No), the ECU 50 opens the variable nozzle opening degree of the turbocharger by a predetermined amount (step S205). Thus, the variable nozzle opening degree is feedback-controlled such that the actual supercharging pressure becomes equal to the target supercharging pressure. Since the operating state varies with time during the actual driving of the vehicle and the target supercharging pressure varies, the variable nozzle opening degree is adjusted to follow the variation.

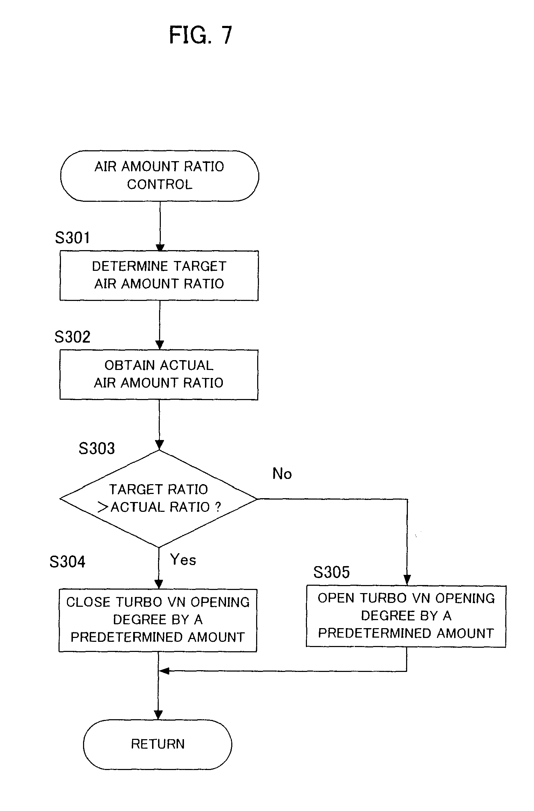

Next, the air amount ratio control in step S104 will be described in detail. FIG. 7 is a flowchart of the air mount ratio control. First, the ECU 50 determines the target air amount ratio (step S301). Specifically, this is performed in a manner described with reference to FIGS. 3 and 4A to 4C. Namely, the ECU 50 obtains, in advance, the limit characteristics 71, 72, 81, 82 of two turbochargers shown in FIG. 3 as examples, and retains them in a form of map, for example. Then, the ECU 50 determines the current pressure ratio based on the detection signal S9 from the supercharging pressure sensor 9 and the atmospheric pressure. By this, the broken line 75 in FIG. 3 is determined. Then, the ECU 50 determines, on the broken line 75, the operating point P1 of the first turbocharger 4 to have the predetermined surge margin M1 with respect to the surge limit indicated by the surge limit characteristic 71, and determines the operating point P2 of the second turbocharger 5 to have the equivalent surge margin M2 (=M1) with respect to the surge limit indicated by the surge limit characteristic 72. Then, the ECU 50 determines the ratio of the air amounts GA1, GA2 at the respective operating points P1, P2 as the target air amount ratio. It is noted that, in this case, the target air amount ratio may be the ratio GA1/GA2 of the air amount of each turbocharger, or may be the ratio GA1/GAall (=GA1+GA2) of the air amount of one turbocharger with respect to the total air amount of the turbochargers. FIG. 4 shows the latter example.

When the target air amount ratio is determined in this way, the ECU 50 calculates the actual ratio of the air amounts (also referred to as "actual air amount ratio") based on the detection signals S17, S18 from the air flow meters 17, 18 (step S302). Then, the ECU 50 controls the variable nozzle opening degree of the turbocharger such that the actual air amount ratio becomes equal to the target air amount ratio. Specifically, when the actual air amount ratio is smaller than the target air amount ratio (step S303; Yes), the ECU 50 closes the variable nozzle opening degree of the turbocharger by a predetermined amount (step S304). On the other hand, when the actual air amount ratio is larger than the target air amount ratio (step S303; No), the ECU 50 opens the variable nozzle opening degree of the turbocharger by a predetermined amount (step S305). Thus, the variable nozzle opening degree is feedback-controlled such that the actual air amount ratio becomes equal to the target air amount ratio. It is noted that, since the supercharging pressure varies during the actual driving of the vehicle and the target air amount ratio varies accordingly, the variable nozzle opening degree is adjusted to follow the variation.

In the above example, the target air amount ratio is determined first, and the variable nozzle opening degree is controlled such that the actual air amount ratio becomes equal to the target air amount ratio. Alternatively, the feed-forward type control can be applied to the variable nozzle opening degree such that the air amount ratio of allowable range can be obtained as a result.

As described above, according to the first example, in a case that only the first turbocharger is the variable turbocharger, the air amount ratio control is executed in the double turbo mode. Therefore, the supercharging pressure can be controlled in a broad range, and the occurrence of the surge in each turbocharger can be prevented.

### (2nd Example)

The second example is an example in which both of two turbochargers are the variable turbochargers. In the single turbo mode, the supercharging pressure control is executed similarly to the first example. On the other hand, in the double turbo mode, one of two turbochargers executes the supercharging pressure control, and the other executes the air amount ratio control. The contents of the supercharging pressure control and the air mount ratio control are the same as those of the first example.

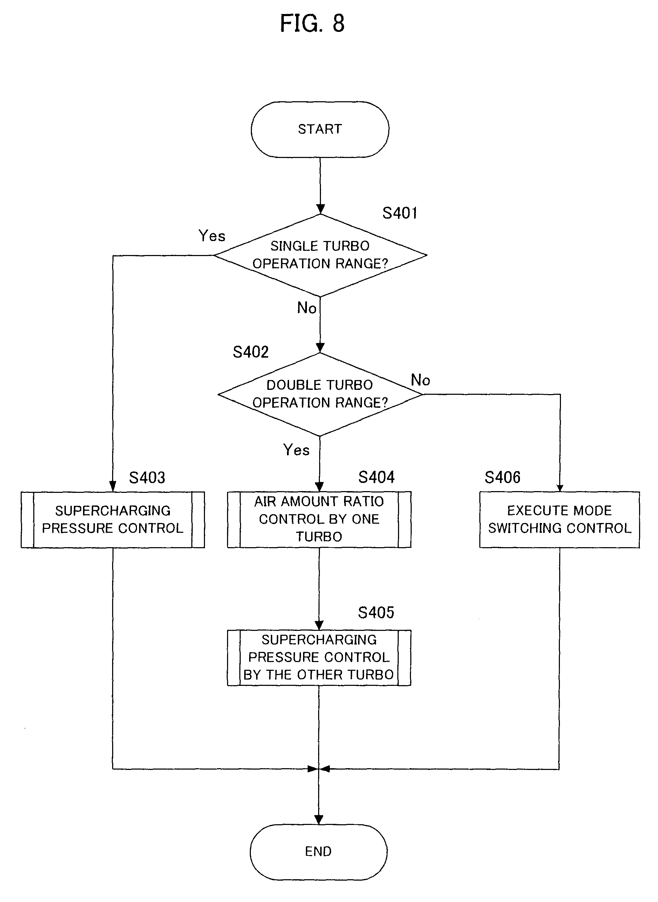

FIG. 8 is a flowchart of the supercharger control according to the second example. First, the ECU 50 determines whether or not the operating state of the internal combustion engine is within the operational range of the single turbo mode (step S401). If it is within the operational range of the single turbo mode, the ECU 50 executes the supercharging pressure control (step S403). On the contrary, if it is not within the operational range of the single turbo mode (step S401; No), the ECU 50 determines whether or not it is within the operational range of double turbo mode (step S402). If it is not within the operational range of the double turbo mode (step S402; No), the ECU 50 executes the mode switching control between the single turbo mode and the double turbo mode (step S406).

If it is within the operational range of the double turbo mode, the ECU 50 executes the air amount ratio control by one of the turbochargers (step S404), and executes the supercharging pressure control by the other one of the turbochargers (step S405). In this case, when the variable nozzle opening degree is varied in the turbocharger executing the air amount ratio control, the actual supercharging pressure of the turbocharger executing the supercharging pressure control varies accordingly, but the supercharging pressure control is executed in the turbocharger, with accepting the variation, by controlling the variable nozzle opening degree to obtain the target supercharging pressure. Similarly, when the variable nozzle opening degree is varied in the turbocharger executing the supercharging pressure control, the air amount ratio of the turbocharger executing the air amount ratio control varies accordingly, but the air amount ratio control is executed in the turbocharger, with accepting the variation, by controlling the variable nozzle opening degree to obtain the target air amount ratio. In this way, each of two turbochargers always executes its control, with accepting the influence by the control that the other turbocharger is executing. Therefore, the occurrence of the surge can be prevented, with accurately controlling the supercharging pressure in a broad range.

### (3rd Example)

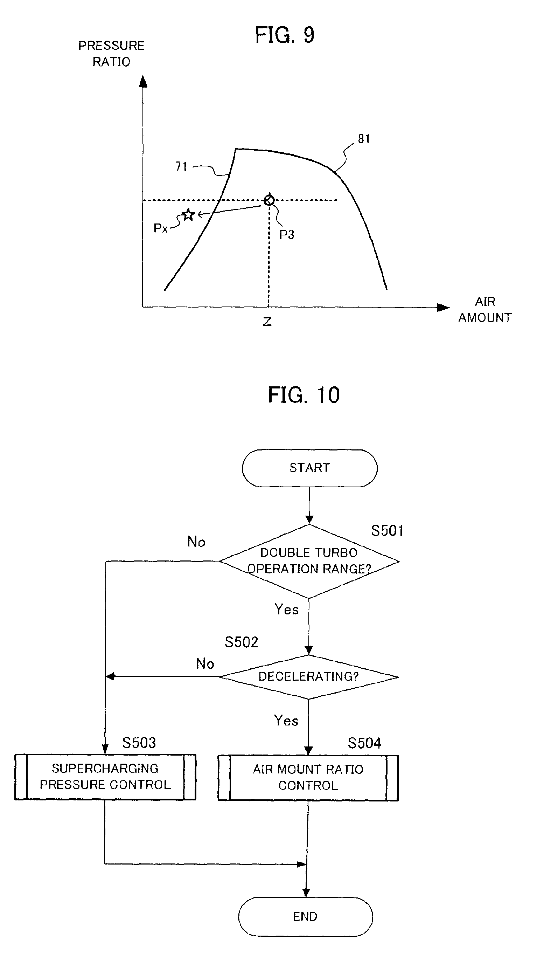

The third example is to prevent the occurrence of the surge when the vehicle shifts from the accelerating state to the decelerating state. FIG. 9 is a diagram for explaining the situation where the surge occurs when the vehicle decelerates. The graph 71 indicates the surge limit characteristic, and the graph 81 indicates the revolution limit characteristic.

Generally, when the quick accelerating state shifts to the decelerating state in the internal combustion engine provided with the turbocharger, the throttle is instantaneously closed and the air amount decreases. However, since the turbocharger keeps the revolution for a while due to the energy of the exhaust gas, the pressure ratio scarcely decreases, rather increases in some cases. In FIG. 9, when the mode shifts to the deceleration mode when the internal combustion engine is operating at the operating point P3 having the surge margin, the air amount decreases, and the pressure ratio scarcely decreases or rather increases a little. Thus, the operating point shifts to the operating point Px, and the surge occurs. Particularly, in such a system shown in FIG. 1 that two turbochargers commonly own the intake and exhaust system, the air amount of each turbocharger is small with respect to the pressure ratio, the surge is likely to occur. Here, if each turbocharger is the variable turbocharger, the pressure ratio can be decreased by opening the variable nozzle to prevent the surge. However, if the capacities of two turbochargers are differencefromeach other,thesupercharging pressureincreases, contrarily, due to the unbalance of the exhaust gas amount and the surge easily occurs, if the variable nozzles of two turbochargers are simply fully opened. Therefore, in the third example, the air amount ratio control is executed to ensure the surge margin of each turbocharger at the time of the deceleration of the internal combustion engine.

First, the description will be given of the case in which only the first turbocharger 4 is the variable turbocharger. FIG. 10 is a flowchart of the supercharger control according to the third example. The ECU 50 determines whether or not the operating state of the internal combustion engine is within the operational range of the double turbo mode (step S501). If it is within the operational range of the double turbo mode, the ECU 50 determines whether or not the vehicle is in the deceleration state (step S502). For example, when the throttle opening degree is full open and the number of engine revolution is smaller than a predetermined number of revolutions, the ECU 50 determines that the vehicle is in the decelerating state. When the ECU 50 determines that it is in the decelerating state (step S502; Yes), it executes the air amount ratio control (step S504). The method of the air amount ratio control here is the same as those in the first and second examples. In the third example, as the method of determining the target air amount ratio, it is possible to add such an additional condition that the exhaust gas amounts flowing through the turbines of two turbochargers are equal or close to each other, in addition to the condition in the first and second examples that the surge margins of two turbochargers are equivalent to each other. By adding this additional condition, the unbalance of the exhaust gas flowing amounts of two turbochargers can be suppressed, and the pressure ratio can be surely decreased to prevent the surge.

On the other hand, if it is not within the operational range of the double turbo mode (step S501; No) and if it not in the decelerating state (step S502; No), the ECU 50 executes the supercharging pressure control (step S503). The supercharging pressure control is the same as those in the first and second examples. The supercharging pressure control is executed when the vehicle is not in the decelerating state in the example shown in FIG. 10. Alternatively, the air amount ratio control may be executed when the vehicle is not in the decelerating state. In that case, although the basic control contents are the same between the cases in which the vehicle is or is not in the decelerating state, the target air amount ratio may be different from each other, by adding such a condition that the exhaust gas amounts flowing through the turbines of those two turbochargers are equal or close to each other, for example.

Next, the description will be given of the case where two turbochargers are the variable turbochargers. Also in this case, basically the same control as shown by the flowchart of FIG. 10 is executed. However, as the condition for determining the target air amount ratio, it is possible to add such an condition that the variable nozzle of each turbocharger is set to the opening degree as close to the full open state as possible to lower the supercharging pressure, in addition to the conditions that the surge margins for two turbochargers are equivalent to each other and that the exhaust gas amount flowing through two turbochargers are equal or close to each other. In this case, since two turbochargers actually have different capacities, it is preferred that the variable nozzle of the first turbocharger, having smaller capacity, is fully opened, and the variable nozzle of the second turbocharger 5, having larger capacity, is little bit closed from the fully opened state. By this, the unbalance of the exhaust gas flowing amount between two turbochargers can be suppressed, and the pressure ratio can be surely lowered to prevent the surge.

In this example, when both of two turbochargers are the variable turbochargers, if the above air amount ratio control is executed by one of two turbochargers, the control method of the other turbocharger is not limited, in principle. Therefore, the similar air amount ratio control may be executed by the other turbocharger, or the supercharging pressure control maybe executed by the other turbocharger like the second example. For example, it is possible to execute the supercharging pressure control by two turbochargers except for the decelerating state of the vehicle, and to continue the supercharging pressure control by one of two turbochargers and execute the air amount ratio control by the other turbocharger in the decelerating state of the vehicle.

As described above, in the third example, the occurrence of the surge is surely prevented by executing the air amount ratio control at the time of the decelerating state of the vehicle, in which the surge is particularly likely to occur.

### [2nd Embodiment]

Next, the description will be given of the second embodiment of the present invention. In the second embodiment, both of two turbochargers are formed as the variable turbochargers. Then, the supercharging pressure control is executed by two turbochargers in the double turbo mode.

As described with reference to FIG. 2, when both of two turbochargers are formed as the variable turbochargers, the supercharging pressure can be accurately controlled in the broad range covered by the graphs 60a to 60c. Therefore, in the second embodiment, the supercharging pressure control is executed by two turbochargers in the double turbo mode, in order to maximize the control range of the supercharging pressure.

However, in this case, the control amount is adjusted based on the difference of the capacities of the turbochargers. Namely, since the turbocharger having larger capacity has higher sensitivity of the supercharging pressure with respect to the control amount of the variable nozzle, the control amount of the variable nozzle (feedback control amount) is made smaller. In the above example, the control amount of the second turbocharger, having larger capacity, is made smaller than the control amount of the first turbocharger having smaller capacity. The content of the supercharging pressure control is the same as that described in the first example.

Although the above example is for the case where both of two turbochargers execute the supercharging pressure control, the similar idea may be applied to the abovementioned second example. In this case, since two turbochargers are controlled for the different target values, i.e. , the target supercharging pressure and the target air amount ratio, respectively, it is presumed that one control largely influence the other control, and the interference is likely to occur. As a countermeasure to this, it is conceivable to reduce the gain of each supercharging pressure control, but doing so deteriorates the follow-up performance to the target.

Therefore, when the supercharging pressure control is executed by one of two turbochargers and the air amount ratio control is executed by the other one of two turbochargers, the control amounts are adjusted in accordance with the capacities of the respective turbochargers. Specifically, the control amount of the second turbocharger having larger capacity is made smaller than the control amount of the first turbocharger. By this, the interference can be suppressed in the case that two controls are executed at the same time, and the supercharging pressure control in a broad range can be achieved with suppressing the interference between two turbochargers.

### INDUSTRIAL APPLICABILITY

The present invention can be used for the control of the vehicle loading an internal combustion engine including a plurality of superchargers.

## Claims

1. A supercharger control apparatus for an internal combustion engine, comprising:
a first and a second superchargers arranged in parallel with each other on an intake air passage and an exhaust passage; and
a control unit which executes an air amount ratio control for controlling air amounts of the first and the second superchargers such that the air amount ratio of the first supercharger and the second supercharger becomes within a predetermined range.

2. The supercharger control apparatus for an internal combustion engine according to claim 1,
wherein at least one of the first and the second superchargers includes a variable supercharging mechanism, and
wherein the control unit determines a target air amount ratio of the first and the second superchargers, and controls the variable supercharging mechanism such that an actual air amount ratio of the first and the second superchargers becomes equal to the target air amount ratio.

3. The supercharger control apparatus for an internal combustion engine according to claim 2, further comprising an air amount detecting unit which detects the air amounts of the first and the second superchargers,
wherein the control unit determines the actual air amount ratio based on the air amounts detected by the air amount detecting unit.

4. The supercharger control apparatus for an internal combustion engine according to claim 1,
wherein the second supercharger has a larger capacity than the first supercharger,
wherein the control unit executes a supercharging pressure control which feedback-controls the air amounts such that supercharging pressures of the first and the second superchargers become equal to target supercharging pressure, respectively, and
wherein the control unit makes a feedback control amount of the second supercharger to be smaller than the feedback control amount of the first supercharger when executing the supercharging pressure control.

5. The supercharger control apparatus for an internal combustion engine according to claim 1,
wherein the first and the second superchargers include a variable supercharging mechanism, and
wherein the control unit executes the air amount ratio control in one of the first and the second superchargers, and executes a supercharging pressure control which feedback-controls the air amounts such that the supercharging pressure becomes equal to a target supercharging pressure in the other one of the first and the second superchargers.

6. The supercharger control apparatus for an internal combustion engine according to claim 1, wherein the control unit executes the air amount ratio control at a time of a deceleration of the internal combustion engine.
